(19) Europäisches Patentamt
European Patent Office
Office européen des brevets

(11) **EP 4 730 722 A1**

(12) **EUROPEAN PATENT APPLICATION**
published in accordance with Art. 153(4) EPC

(43) Date of publication:
**22.04.2026 Bulletin 2026/17**

(21) Application number: **23941001.2**

(22) Date of filing: **13.06.2023**

(51) International Patent Classification (IPC):
**H04L 25/02** $^{(2006.01)}$

(52) Cooperative Patent Classification (CPC):
**G01S 7/41; G01S 13/06; H04L 25/02**

(86) International application number:
**PCT/CN2023/099979**

(87) International publication number:
**WO 2024/254763 (19.12.2024 Gazette 2024/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Beijing Xiaomi Mobile Software Co., Ltd.**
**Beijing 100085 (CN)**

(72) Inventors:
• **ZHANG, Zhenyu**
**Beijing 100085 (CN)**
• **WU, Yumin**
**Beijing 100085 (CN)**
• **ZHAO, Qun**
**Beijing 100085 (CN)**
• **HUANG, Yixuan**
**Beijing 100085 (CN)**
• **YE, Qibin**
**Beijing 100085 (CN)**
• **HU, Zelin**
**Beijing 100085 (CN)**
• **HU, Su**
**Beijing 100085 (CN)**

(74) Representative: **Dehns Germany Partnerschaft mbB**
**Theresienstraße 6-8**
**80333 München (DE)**

(54) **METHOD AND APPARATUS FOR DETERMINING COMMUNICATION AND SENSING DETECTION RESULT, AND STORAGE MEDIUM**

(57)     Embodiments of the present disclosure relate to the field of communications, and provide a method and apparatus for determining a communication and sensing detection result, a communication device, and a storage medium. The method comprises: determining, within at least one operation cycle, an uplink channel estimation result in an uplink stage and a communication and sensing frequency domain sending signal and a communication and sensing frequency domain receiving signal in a downlink stage; and on the basis of the uplink channel estimation result, the communication and sensing frequency domain sending signal and the communication and sensing frequency domain receiving signal within the at least one operation cycle, determining a communication and sensing detection result, wherein one operation cycle comprises the uplink stage and the downlink stage, the communication and sensing frequency domain receiving signal is determined by demodulating an echo signal, the echo signal is a signal obtained after an integration signal sent by a network device in the downlink stage is reflected by a terminal, and the integration signal is determined by modulating the communication and sensing frequency domain sending signal. According to the embodiments of the present disclosure, the inherent radar multipath interference of a terminal can be effectively eliminated.

Determine, in at least one operation cycle, an uplink channel estimation result in an uplink phase and a communication and sensing frequency domain transmission signal and a communication and sensing frequency domain reception signal in a downlink phase — S201

Determine a communication and sensing detection result according to the uplink channel estimation result, the communication and sensing frequency domain transmission signal and the communication and sensing frequency domain reception signal in the at least one operation cycle — S202

FIG. 2a

**Description**

**TECHNICAL FIELD**

The present disclosure relates to the field of communication technologies, and in particular, to a method and an apparatus for determining a communication and sensing detection result, a communication device, and a computer-readable storage medium.

**BACKGROUND**

With the rapid development of communication information technologies, in fields such as 6G, Internet of Vehicles, unmanned aerial vehicle networking, and military applications, in-depth research on communication and sensing detection technology (also named as integrated communication and radar technology) is required to achieve deep integration of communication and sensing services.

The multipath effect, prevalent in various wireless communication scenarios, inevitably introduces multipath interference in detection results. This leads to numerous false targets in communication and sensing detection, increasing the difficulty of radar detection.

Related technologies, such as radar clutter processing schemes and false target elimination schemes, cannot effectively eliminate the inherent radar multipath interference from environmental targets. This challenge hinders the development and widespread adoption of communication and sensing detection technology.

**SUMMARY**

Embodiments of the present disclosure provide a method and an apparatus for determining a communication and sensing detection result, a communication device, and a computer-readable storage medium, which can solve the aforementioned problems of the prior art. The technical solution is as follows:

According to one aspect of the embodiments of the present disclosure, a method for determining a communication and sensing detection result is provided. The method includes:

determining, in at least one operation cycle, an uplink channel estimation result in an uplink phase and a communication and sensing frequency domain transmission signal and a communication and sensing frequency domain reception signal in a downlink phase; and

determining a communication and sensing detection result according to the uplink channel estimation result, the communication and sensing frequency domain transmission signal and the communication and sensing frequency domain reception signal in the at least one operation cycle;

where one operation cycle includes an uplink phase and a downlink phase;

the communication and sensing frequency domain reception signal is determined by demodulating an echo signal, the echo signal is a reflected signal from a terminal with respect to an integrated signal transmitted by the network device in the downlink phase; and

the integrated signal is determined by modulating the communication and sensing frequency domain transmission signal.

According to another aspect of the embodiments of the present disclosure, an apparatus for determining a communication and sensing detection result is provided. The apparatus includes:

a processing module, configured to determine, in at least one operation cycle, an uplink channel estimation result in an uplink phase and a communication and sensing frequency domain transmission signal and a communication and sensing frequency domain reception signal in a downlink phase; and

the processing module is further configured to determine a communication and sensing detection result according to the uplink channel estimation result, the communication and sensing frequency domain transmission signal and the communication and sensing frequency domain reception signal in the at least one operation cycle;

where one operation cycle includes an uplink phase and a downlink phase;

the communication and sensing frequency domain reception signal is determined by demodulating an echo signal, the echo signal is a reflected signal from a terminal with respect to an integrated signal transmitted by the network device in the downlink phase; and

the integrated signal is determined by modulating the communication and sensing frequency domain transmission signal.

According to another aspect of the embodiments of the present disclosure, a communication device is provided. The communication device includes a memory, a processor, and a computer program stored on the memory. The processor executes the computer program to implement the method for determining a communication and sensing detection result provided in the above aspect.

According to yet another aspect of the embodiments of the present disclosure, a computer-readable storage medium is provided. A computer program is stored on the computer-readable storage medium. The computer program, when executed by a processor, implements the method for determining a communication and sensing detection result provided in the above aspect.

The beneficial effects brought by the technical solutions provided in the embodiments of the present disclosure are:

by analyzing the generation logic and transmission process of the echo signal, it is determined that processing the echo signal by further incorporating the estimated propagation channel information, based on the existing integrated signal, can effectively eliminate the inherent radar multipath interference from environmental targets. To obtain the channel estimation for the one-way propagation, the embodiments of the present disclosure subdivide each operation cycle into uplink and downlink phases. The channel estimation for each operation cycle is obtained by receiving the uplink signal in the uplink phase.

## BRIEF DESCRIPTION OF DRAWINGS

In order to more clearly illustrate the technical solutions in the embodiments of the present disclosure, the following will briefly introduce the accompanying drawings required for describing the embodiments of the present disclosure.

FIG. 1 is a schematic architectural diagram of a communication system according to an embodiment of the present disclosure.
FIG. 2a is a schematic flowchart of a method for determining a communication and sensing detection result according to an embodiment of the present disclosure.
FIG. 2b is a schematic diagram of an operation cycle according to an embodiment of the present disclosure.
FIG. 2c is a schematic flowchart illustrating transmitting an integrated signal via a network device's transmitter (Tx), receiving an echo, and performing radar processing according to an embodiment of the present disclosure.
FIG. 3a is a schematic diagram of a radar image obtained by a method for determining a communication and sensing detection result according to the related art.
FIG. 3b is a schematic diagram of a radar image obtained by a method for determining a communication and sensing detection result according to an embodiment of the present disclosure.
FIG. 4 is a schematic structural diagram of an apparatus for determining a communication and sensing detection result according to an embodiment of the present disclosure.
FIG. 5 is a schematic structural diagram of a communication device according to an embodiment of the present disclosure.

## DETAILED DESCRIPTION

Embodiments of the present disclosure are described below in conjunction with the accompanying drawings. It should be understood that the implementations described herein with reference to the accompanying drawings are exemplary descriptions intended to explain the technical solutions of the embodiments of the present disclosure and do not constitute limitations thereon.

Those skilled in the art can understand that unless specifically stated otherwise, the singular forms "a," "an," and "the" used herein may also include plural forms. It should be further understood that the term "including" and "containing" used in the embodiments of the present disclosure mean that the corresponding features can be realized as the presented features, information, data, steps, operations, elements, and/or components, but do not exclude the realization as other features, information, data, steps, operations, elements, components, and/or combinations thereof supported by the technical field. It should be understood that when an element is referred to as being 'connected" or "coupled" to another element, it can be directly connected or coupled to the other element, or it can be connected through an intermediate element. Furthermore, "connected" or "coupled" as used herein can include wireless connections or wireless coupling. The term "and/or" used herein indicates at least one of the items defined by the term. For example, "A and/or B" can be realized as "A", or as "B", or as "A and B".

In order to make the purposes, technical solutions and advantages of the present disclosure clearer, a further detailed description of embodiments of the present disclosure will be provided below in conjunction with the accompanying drawings.

First, several terms involved in the present disclosure are introduced and explained:

Channel is a transmission medium of signals, which can be divided into two categories: wired channels and wireless channels. Wired channels include open wires, symmetric cables, coaxial cables, and optical fibers, among others. Wireless channels include ground wave propagation, short-wave ionospheric reflection, ultra-short wave or microwave line-of-sight relay, artificial satellite relay, and various scattering channels. When a signal propagates in a wireless channel, the received signal is not only obtained through a single direct path but also includes reflected, diffracted, and data signals arriving via different paths. This phenomenon is named as multipath propagation, and such a channel is named as a multipath channel (Multi-path channel).

Orthogonal Frequency Division Multiplexing (OFDM) technology enables high-speed serial data transmission in parallel through frequency division multiplexing. It has good resistance to multipath fading and can support multi-user access.

Cyclic Prefix (CP) is formed by copying the signal from the tail of an OFDM symbol to its head. There are mainly two lengths of CP: Normal Cyclic Prefix and Extended Cyclic Prefix. The cyclic prefix can be associated with other multipath component information to obtain complete information. Additionally, the cyclic prefix enables time pre-estimation and frequency synchronization.

Discrete Fourier Transform (DFT) is a form of the Fourier Transform that is discrete in both the time and frequency domains, transforming the time-domain sampling of a signal into the frequency-domain sampling of its DTFT. In form, the sequences at both ends (time domain and frequency domain) are finite in length, but in practice, both sequences should be considered as the principal value sequences of discrete periodic signals. Even when performing DFT on a finite-length discrete signal, it should be regarded as the transform of its periodic extension. In practical applications, the Fast Fourier Transform is typically used to compute the DFT.

The method and apparatus for determining a communication and sensing detection result, the communication device, and the computer-readable storage medium provided by the present disclosure aim to solve the technical problems of the existing technology as mentioned above.

The technical solutions of the present disclosure and their effects will be explained below through the description of several exemplary embodiments. It should be noted that the following embodiments can be referenced, borrowed from, or combined with each other. Identical terms, similar features, and similar implementation steps in different embodiments will not be described again.

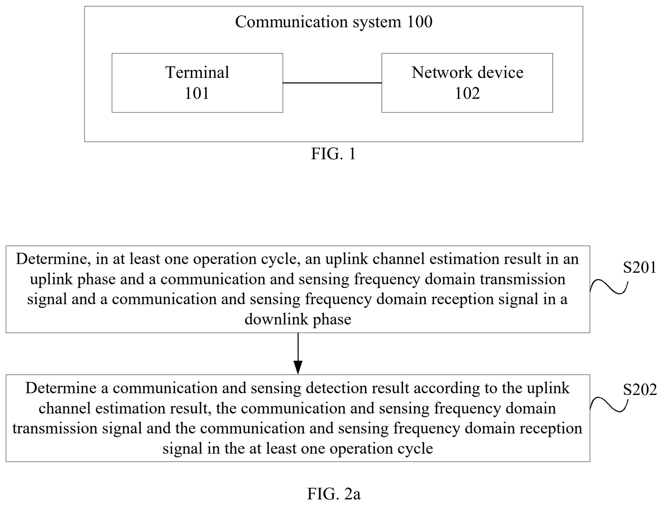

FIG. 1 is a schematic architectural diagram of a communication system according to an embodiment of the present disclosure. The communication system 100 includes a terminal 101 and a network device 102.

In some embodiments, the terminal 101 includes, for example, at least one of a mobile phone, a wearable device, an Internet of Things (IoT) device, a vehicle with communication capabilities, a smart vehicle, a tablet computer (Pad), a computer with wireless transceiver functionality, a virtual reality (VR) terminal device, an augmented reality (AR) terminal device, a wireless terminal in industrial control, a wireless terminal in self-driving, a wireless terminal in remote medical surgery, a wireless terminal in a smart grid, a wireless terminal in transportation safety, a wireless terminal in a smart city, or a wireless terminal in a smart home, but is not limited thereto.

In some embodiments, the network device 102 may include an access network device.

In some embodiments, the access network device is, for example, a node or device that connects terminals to a wireless network, and may include at least one of an evolved NodeB (eNB) in 5G communication systems, a next-generation evolved NodeB (ng-eNB), a next-generation NodeB (gNB), a Node B (NB), a home Node B (HNB), a home evolved NodeB (HeNB), a wireless backhaul device, a radio network controller (RNC), a base station controller (BSC), a base transceiver station (BTS), a baseband unit (BBU), a mobile switching center, a base station in 6G communication systems, an Open RAN, a Cloud RAN, a base station in other communication systems, or an access node in a wireless fidelity (WiFi) system, but is not limited thereto.

In some embodiments, the technical solutions of the embodiments of the present disclosure can be applied to an Open RAN architecture. In this case, the interfaces between network devices or within a network device involved in the embodiments of the present disclosure may become internal interfaces of the Open RAN, and the processes and information interaction between these internal interfaces can be implemented through software or programs.

In some embodiments, the access network device may be composed of a central unit (CU) and a distributed unit (DU). The CU may also be named as a control unit. Using the CU-DU structure, the protocol layers of the network device can be split, with the functions of some protocol layers placed in the CU for centralized control, and the functions of the remaining part or all protocol layers distributed in the DUs, which are centrally controlled by the CU, but it is not limited thereto.

It is to be understood that the communication system described in the embodiments of the present disclosure is intended to more clearly illustrate the technical solutions of the embodiments of the present disclosure and does not constitute a limitation of the technical solutions proposed by the embodiments of the present disclosure, and a person of ordinary skill in the art may know that, with an evolution of a system architecture and an emergence of a new business scenario, the technical solutions proposed by the embodiments of the present disclosure are equally applicable to similar technical problems.

The following embodiments of the present disclosure can be applied to the communication system 100 shown in FIG. 1, or part of its entities, but are not limited thereto. The entities shown in FIG. 1 are exemplary. The communication system may include all or part of the entities in FIG. 1, and may also include other entities not shown in FIG. 1. The number and form of each entity are arbitrary. The connection relationships between the entities are exemplary. The entities may or may not be connected to each other, and the connections can be in any form, either direct or indirect, and either wired or wireless.

The embodiments of the present disclosure can be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), 5G New Radio (NR), Future Radio Access (FRA), New-Radio Access Technology (RAT), New Radio (NR), New radio access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a Public Land Mobile Network (PLMN) network, a Device-to-Device (D2D) system, a Machine to Machine (M2M) system, an Internet of Things (IoT) system, Vehicle-to-Everything (V2X), systems utilizing other communication methods, next-generation systems based on them, etc. Additionally, a combination of multiple systems (e.g., a combination of LTE or LTE-A with 5G, etc.) may be applied.

An embodiment of the present disclosure provides a method for determining a communication and sensing detection result, which is performed by a network device. As shown in FIG. 2a, the method includes:
S201, determining, in at least one operation cycle, an uplink channel estimation result in an uplink phase and a communication and sensing frequency domain transmission signal and a communication and sensing frequency domain reception signal in a downlink phase.

In some embodiments, the number of operation cycles is radar processing estimation symbol number $N_f$.

Each operation cycle in the embodiments of the present disclosure is further divided into an uplink phase and a downlink phase. In the uplink phase, a terminal sends an uplink signal containing a training sequence or a pilot to the network device. In the downlink phase, the network device sends a downlink integrated communication and radar signal (also named as an integrated signal) to the terminal and receives an echo signal reflected by the terminal from the integrated signal.

In some embodiments, a duration of the uplink phase and a duration of the downlink phase within each operation cycle are the same.

In some embodiments, a total number of OFDM subcarriers is N, a base symbol period (cycle) is $T$, a cyclic prefix period is $T_{CP}$, a symbol period is $T_{sym}$, and $T_{sym} = T + T_{CP}$. A cyclic prefix length is $N_{CP} = NT_{CP}/T$, and a subcarrier spacing is $\Delta f = 1/T$.

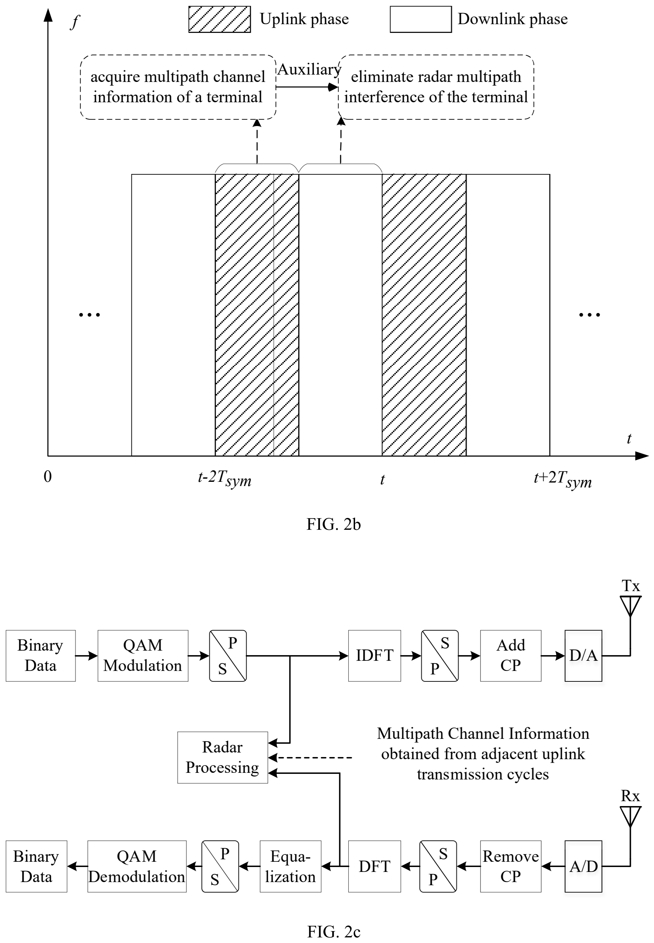

Please refer to FIG. 2b, which exemplarily shows a schematic diagram of an operation cycle provided by an embodiment of the present disclosure. As shown, the duration of both the uplink phase and the downlink phase in this embodiment is $T_{sym}$. In the uplink phase, the terminal sends an uplink signal containing a training sequence or a pilot to the network device, and the network device performs uplink channel estimation and communication reception. In the downlink phase, the network device sends the integrated signal to the terminal, receives the echo signal, and performs radar processing.

In an embodiment, the uplink signal sent by the terminal is an OFDM symbol containing a pilot or a training sequence. Thus, the network device performs uplink channel estimation using existing channel estimation methods.

In some embodiments, the uplink channel estimation result obtained by the network device is a channel time domain response of a one-way propagation for a corresponding uplink phase.

In an embodiment, the one-way propagation channel is a Rician channel.

It should be understood that one-way propagation refers to a signal propagating from a first communication device to a second communication device, while two-way propagation refers to a signal propagating from a first communication device to a second communication device and then back to the first communication device. Understandably, when the first communication device refers to the terminal, the second communication device refers to the network device, and when the first communication device refers to the network device, the second communication device refers to the terminal. Correspondingly, the one-way propagation for the uplink phase refers to the signal propagating from the terminal to the network device.

It should be noted that in order to facilitate derivation and understanding, the embodiment of the present disclosure makes an ideal estimation of the uplink channel.

The network device in the embodiments of the present disclosure sends the downlink integrated signal to the terminal and receives the echo signal in each downlink phase.

Please refer to FIG. 2c, which exemplarily shows a schematic flowchart of transmitting an integrated signal via a network device's transmitter (Tx), receiving an echo signal, and performing radar processing according to an embodiment of the present disclosure. As shown, for a $\mu$-th operation cycle, it includes the following.

Modulating binary data via Quadrature Amplitude Modulation (QAM) or Phase Amplitude Modulation (PAM) into communication and sensing frequency domain symbols (also named as RadCom frequency domain symbols) $\{X_\mu[k]\}_{K=0}^{N-1}$. Understandably, $X_\mu[k]$ is a communication and sensing frequency domain symbol for a k-th subcarrier of the μ-th operation cycle being sent.

Performing Serial/Parallel (S/P) conversion on the communication and sensing frequency domain symbols to obtain a first communication and sensing frequency domain symbol vector (i.e., the communication and sensing frequency domain transmission signal) $X_\mu=[X_\mu[0],X_\mu[1], ...,X_\mu[N-1]]^T$, where the superscript T denotes the transpose operation.

One path of the communication and sensing frequency domain transmission signal is used for obtaining the communication and sensing detection result, while the other path of the communication and sensing frequency domain transmission signal is mapped to the time domain via Inverse Discrete Fourier Transform (IDFT). Understandably, a corresponding communication and sensing time domain symbol vector is x=IDFT(X), where IDFT in the formula denotes the IDFT operation.

The μ-th communication and sensing time domain transmission signal of the communication and sensing time domain symbol vector (also becoming a time domain sample of the μ-th downlink OFDM symbol) is expressed as:

$$x_\mu[n]=\frac{1}{\sqrt{N}}\sum_{k=0}^{N-1} X_\mu[k]\, e^{\frac{j2\pi kn}{N}}, \text{n=0, 1, ..., N-1; μ=0, 1, ..., N}_f\text{-1;}$$

where $N_f$ is the number of operation cycles.

The signal obtained by modulating the communication and sensing time domain transmission signal is sent as the integrated signal into the channel, thus completing the process of sending the downlink integrated signal.

In some embodiments, modulation includes performing Parallel/Serial (P/S) conversion on the communication and sensing time domain transmission signal, adding a Cyclic Prefix (CP), and performing Digital-to-Analog (D/A) conversion, etc.

After sending the integrated signal to the terminal, the network device further receives an arrived signal affected by the channel (i.e., the echo signal reflected by the terminal from the integrated signal).

The received echo signal is demodulated to obtain a second communication and sensing frequency domain symbol vector (i.e., the communication and sensing frequency domain reception signal) $Y_\mu=\{Y_\mu[k]\}_{K=0}^{N-1}$, where $Y_\mu[k]$ represents an echo frequency domain item for the k-th subcarrier of the μ-th operation cycle being received.

In an embodiment, demodulation includes performing Analog-to-Digital (A/D) conversion on the echo signal, removing the CP, then performing S/P conversion, and mapping to the frequency domain via Discrete Fourier Transform (DFT).

The obtained communication and sensing frequency domain reception signal is also split (divided) into two paths: one path is used for radar processing, and the other path undergoes channel equalization to compensate for channel distortion.

In an embodiment, equalization can use a Minimum Mean-Squared Error (MMSE) or a Zero Forcing (ZF) equalizer.

A MMSE equalization coefficient is:

$$C[k]=\frac{H^*[k]}{|H[k]|^2+(\varepsilon_b/N_0)^{-1}}$$

A ZF equalization coefficient is:

$$C[k]=\frac{1}{H[k]}$$

where $H[k] = \{\text{DFT}(\{h[n]\}_{n=0}^{N_{ch}-1})\}_k$, represents a channel frequency domain response coefficient for the k-th subcarrier of the one-way propagation, $H^*[k]$ represents a conjugate operation on $H[k]$, $\varepsilon_b$ and $N_0$ are an energy per bit of the signal and a power spectral density of an Additive White Gaussian Noise (AWGN), respectively.

The equalized signal can be expressed as an IDFT result of a product of the communication and sensing frequency domain reception signal and the equalization coefficient:

$$\hat{y}=\mathrm{IDFT}(Y[k]C[k]),\ \mathrm{n}=0,\ 1,\ \dots,\ N\text{-}1;$$

S202, determining a communication and sensing detection result according to the uplink channel estimation result, the communication and sensing frequency domain transmission signal and the communication and sensing frequency domain reception signal in the at least one operation cycle.

In the embodiments of the present disclosure, for each operation cycle, the uplink channel estimation result of the operation cycle can be determined based on the received uplink signal of the operation cycle. When the uplink phase and the downlink phase are within a coherence time, it can be assumed that channel information remains unchanged between the uplink phase and the downlink phase. Due to channel reciprocity, in the downlink phase adjacent to the uplink phase within the same operation cycle, the integrated signal experiences two approximately identical channel propagations. Based on this, the embodiments of the present disclosure derive the channel estimation result for the two-way propagation experienced by the echo signal from the one-way uplink channel estimation result obtained based on the received uplink signal. Consequently, by using the two-way channel estimation result and the integrated signal to process the echo signal, the inherent radar multipath interference of the terminal is effectively eliminated.

By analyzing the generation logic and transmission process of the echo signal, the embodiments of the present disclosure determine that processing the echo signal by further incorporating the estimated propagation channel information, based on the existing integrated signal, can effectively eliminate the inherent radar multipath interference of the terminal. To obtain the propagation channel estimation, the embodiments of the present disclosure subdivide each operation cycle into uplink and downlink phases. By receiving and parsing the uplink signal in the uplink phase, the uplink channel estimation result for each operation cycle is obtained.

Based on the above embodiments, as an optional embodiment, the determining a communication and sensing detection result according to the uplink channel estimation result, the communication and sensing frequency domain transmission signal and the communication and sensing frequency domain reception signal in the at least one operation cycle includes:

> determining an echo channel frequency domain response of an operation cycle according to an uplink channel estimation result of the operation cycle; and
> determining the communication and sensing detection result according to the echo channel frequency domain response, the communication and sensing frequency domain transmission signal, and the communication and sensing frequency domain reception signal in the at least one operation cycle.

In some embodiments, the communication and sensing frequency domain transmission signal refers to OFDM frequency domain symbols in the transmitted integrated signal.

In some embodiments, the communication and sensing frequency domain reception signal refers to frequency domain symbols in the received echo signal.

In some embodiments, the OFDM frequency domain symbols refer to frequency domain samples of the OFDM symbols.

In some embodiments, the echo channel frequency domain response is a channel frequency domain response experienced by the echo signal after two-way propagation.

In some embodiments, the channel frequency domain response refers to frequency domain samples of a channel impulse response. Similarly, the channel time domain response refers to time domain samples of the channel impulse response.

As can be seen from FIG. 2c above, in the process of sending the integrated signal during the downlink phase of each operation cycle, the embodiments of the present disclosure retain one path of the communication and sensing frequency domain transmission signal. Simultaneously, in the process of receiving the echo signal, one path of the communication and sensing frequency domain reception signal is also retained. Thereby, the communication and sensing detection result of the terminal over the multiple operation cycles is specifically determined based on the echo channel frequency domain response, the communication and sensing frequency domain transmission signal, and the communication and sensing frequency domain reception signal of each operation cycle.

Based on the foregoing various embodiments, as an optional embodiment, the uplink channel estimation result includes a channel time domain response of one-way propagation.

Determining an echo channel frequency domain response of an operation cycle according to an uplink channel estimation result of the operation cycle includes:

> obtaining a channel frequency domain response of one-way propagation of the operation cycle by performing a discrete Fourier transform (DFT) operation on the channel time domain response of one-way propagation of the operation cycle; and

determining the echo channel frequency domain response of the operation cycle according to the channel frequency domain response of one-way propagation of the operation cycle.

It should be noted that the uplink signal in the present disclosure may include a training sequence or a pilot. Thus, using existing channel estimation methods, channel estimation is performed based on the training sequence or pilot to determine a channel time domain response $\{h_\mu[n]\}_{n=0}^{N_{ch}-1}$ of the one-way propagation of the operation cycle, where $h_\mu[n]$ represents a channel time domain response coefficient of a n-th channel in the $\mu$-th operation cycle.

It is worth noting that, since the network device detects the terminal in the downlink phase, its signal undergoes two-way propagation. To ensure radar ranging performance, the total time of the two-way propagation cannot be longer than a cyclic prefix duration of the OFDM symbol. That is, a multipath channel length $N_{ch}$ in the embodiments of the present disclosure satisfies $N_{ch}<N_{cp}/2$, where $N_{ch}=N\Tau_{max}/T$, and a maximum transmission delay $\Tau_{max}<T_{cp}/2$.

After obtaining the channel time domain response of the one-way propagation, it is mapped to the frequency domain by DFT to obtain the channel frequency domain response of the one-way propagation (which can be expressed as $\mathrm{DFT}\{h_\mu[n]\}_{n=0}^{N_{ch}-1}$).

Since the echo signal undergoes two-way propagation, the channel frequency domain response coefficient of the k-th subcarrier in the echo channel frequency domain response can be determined according to two one-way channel frequency domain responses of the subcarrier in the downlink phase.

In some embodiments, the echo channel frequency domain response of the operation cycle can be obtained by performing a linear convolution operation on the two channel time domain responses.

A channel frequency domain response coefficient $H_{r,\mu}[k]$ for the k-th subcarrier in the echo channel frequency domain response of the $\mu$-th operation cycle in the embodiments of the present disclosure can be expressed as:

$$H_{r,\mu}[k]=\mathrm{DFT}\{h_\mu[n] * h_\mu[n]\}=\left(H_\mu[k]\right)^2, \mathrm{k}=0,1,\ldots,\mathrm{N}\text{-}1$$

That is, determining the echo channel frequency domain response of the operation cycle according to the channel time domain response of one-way propagation of the operation cycle includes:

obtaining a channel frequency domain response $H_\mu[k]$ of one-way propagation of the operation cycle by performing a discrete Fourier transform (DFT) operation on the channel time domain response $\{h_\mu[n]\}_{n=0}^{N_{ch}-1}$ of one-way propagation of the operation cycle; and

determining the echo channel frequency domain response $H_{r,\mu}[k]$ of the operation cycle according to the channel frequency domain response $H_\mu[k]$ of one-way propagation of the operation cycle.

In some embodiments, each communication and sensing frequency domain transmission signal includes OFDM frequency domain symbols of all subcarriers in a corresponding downlink phase. A OFDM frequency domain symbol of a k-th subcarrier in a $\mu$-th downlink phase can be denoted as $X_\mu[k]$.

In some embodiments, each echo channel frequency domain response includes channel frequency domain response coefficients of all subcarriers in the corresponding downlink phase. The echo channel frequency domain response for the $\mu$-th downlink phase can be denoted as $H_{r,\mu}$. Correspondingly, the channel frequency domain response coefficient for the k-th subcarrier of the echo channel frequency domain response can be denoted as $H_{r,\mu}[k]$.

In some embodiments, each communication and sensing frequency domain reception signal includes echo frequency domain items $Y_\mu$ of all subcarriers in the corresponding downlink phase. Each echo frequency domain item includes a first sub-item related to an OFDM frequency domain symbol of a corresponding subcarrier, a second sub-item related to a channel frequency domain response coefficient of the corresponding subcarrier, and a third sub-item related to the communication and sensing detection result of the terminal.

Specifically, when the uplink and downlink cycles are within the coherence time, it can be assumed that the channel information remains unchanged during the uplink and downlink cycles. Due to channel reciprocity, in adjacent downlink phases, the integrated signal experiences two approximately identical channel propagations. Thus, a communication and sensing frequency domain reception signal corresponding to a OFDM frequency domain symbol of a n-th subcarrier in the $\mu$-th downlink phase can be expressed as:

$$y_\mu[n] = x_{\mu,echo}[n] * h_\mu[n] * h_\mu[n] + \eta_\mu[n],$$

$$n = 0, 1, \dots, N\text{-}1; \mu = 0, 1, \dots, N_f\text{-}1;$$

where $\eta_\mu[n]$ represents Additive White Gaussian Noise (AWGN), $h_\mu[n]$ represents a time domain response coefficient of the n-th subcarrier in the $\mu$-th downlink phase, and * denotes a linear convolution operation.

$x_{\mu,echo}[n]$ represents a reflected echo item of the time domain sample $x_\mu[n]$ of the OFDM frequency domain symbol of the n-th subcarrier in the $\mu$-th downlink phase, which can be expressed by the following formula:

$$x_{\mu,echo}[n] = \frac{1}{\sqrt{N}} e^{j2\pi f_D PRI} \sum_{k=0}^{N-1} x_\mu[k] e^{\frac{-j2\pi kL}{N}} e^{\frac{j2\pi kn}{N}}$$

where L and $f_D$ are the echo delay and Doppler frequency offset of the detected terminal, respectively;

$$L = \lfloor 2RN \, \Delta f / c \rfloor;$$

$$f_D = 2 v f_c / c;$$

$f_c$ is the carrier frequency, and c is the speed of light;
$R$ and $v$ are the distance and relative speed between the terminal and the executing subject of the present disclosure, respectively, which are the parameters to be determined;
$PRI$ is a pulse repetition interval.
In an embodiment, $PRI = 2T_{sym}$.

Based on the above embodiments, as an optional embodiment, the determining the communication and sensing detection result of the terminal over the multiple operation cycles according to the echo channel frequency domain response, the communication and sensing frequency domain transmission signal, and the communication and sensing frequency domain reception signal in the at least one operation cycle includes:

obtaining the third sub-item of the echo frequency domain item of the corresponding subcarrier in the downlink phase by eliminating the first sub-item and the second sub-item of the echo frequency domain item of the corresponding subcarrier according to the OFDM frequency domain symbol of the subcarrier in the communication and sensing frequency domain transmission signal and the channel frequency domain response coefficient of the corresponding subcarrier in the echo channel frequency domain response of the downlink phase; and
determining the communication and sensing detection result according to the third sub-items corresponding to respective subcarriers of at least one downlink phase.

By substituting the above expression for $x_{\mu,echo}[n]$ into the expression for the echo reception signal, and combining it with the above expression for the channel frequency domain response coefficient $H_{r,\mu}[k]$, the expression $Y_\mu[k]$ for the echo frequency domain item of the k-th subcarrier in the $\mu$-th downlink phase can be obtained:

$$Y_\mu[k] = \left(H_\mu[k]\right)^2 X_\mu[k] \, e^{\frac{-j2\pi kL}{N}} e^{j2\pi \mu f_D PRI}$$

From the above expression, it can be seen that each echo frequency domain item in the embodiments of the present disclosure includes three sub-items: the first sub-item is $X_\mu[k]$, the second sub-item is $(H_\mu[k])^2$, and the third sub-item is $e^{\frac{-j2\pi kL}{N}} e^{j2\pi \mu f_D PRI}$.

Further analysis of the third sub-item of each echo frequency domain item reveals that the third sub-item includes a distance factor $e^{\frac{-j2\pi kL}{N}}$ and a speed factor $e^{j2\pi \mu f_D PRI}$.

It can be seen that the distance factor is related to a subcarrier $k$ and an echo delay $L$ of the terminal; and the speed factor is related to an operation cycle $\mu$ and a Doppler frequency offset $f_D$ of terminal.

Therefore, the embodiments of the present disclosure can establish a quotient matrix. In this quotient matrix, a divisor for each element is a product of an OFDM frequency domain symbol of the subcarrier in the communication and sensing frequency domain transmission signal and a channel frequency domain response coefficient of the subcarrier in the echo channel frequency domain response for one subcarrier in one downlink phase. A dividend is the echo frequency domain item of the subcarrier in that downlink phase. Thereby, the first sub-item and the second sub-item in the echo frequency domain item are eliminated, obtaining the third sub-item of the echo frequency domain item for the subcarrier in the downlink phase.

Specifically, the embodiments of the present disclosure arrange the elements in matrix form, taking each complete OFDM frequency domain symbol as a column, resulting in the following matrices:

$$\mathbf{M}_{\mathrm{X}}=\left\{\begin{array}{cccc} X_0[0] & X_1[0] & ... & X_{N_f-1}[0] \\ X_0[1] & X_1[1] & ... & X_{N_f-1}[1] \\ ... & ... & ... & ... \\ X_0[N-1] & X_1[N-1] & ... & X_{N_f-1}[N-1] \end{array}\right\}_{N\times N_f}$$

$$\mathbf{M}_{\mathrm{H}}=\left\{\begin{array}{cccc} H_0[0] & H_1[0] & ... & H_{N_f-1}[0] \\ H_0[1] & H_1[1] & ... & H_{N_f-1}[1] \\ ... & ... & ... & ... \\ H_0[N-1] & H_1[N-1] & ... & H_{N_f-1}[N-1] \end{array}\right\}_{N\times N_f}$$

$$\mathbf{M}_{\mathrm{Y}}=\left\{\begin{array}{cccc} Y_0[0] & Y_1[0] & ... & Y_{N_f-1}[0] \\ Y_0[1] & Y_1[1] & ... & Y_{N_f-1}[1] \\ ... & ... & ... & ... \\ Y_0[N-1] & Y_1[N-1] & ... & Y_{N_f-1}[N-1] \end{array}\right\}_{N\times N_f}$$

To prevent distortion, all elements in $\mathbf{M}_{\mathrm{X}}$ that are 0 are updated to 1. Then, matrix element division is performed to obtain a quotient matrix $\mathbf{M}_D=\mathbf{M}_\mathrm{Y}/(\mathbf{M}_\mathrm{X}\cdot\mathbf{M}_\mathrm{H})$, where ($\cdot$) denotes matrix element-wise multiplication. The elements of this quotient matrix can be expressed as:

$$\frac{Y_\mu[k]}{X_\mu[k]H_{r,\mu}[k]}=\frac{(H_\mu[k])^2 X_\mu[k]\,e^{\frac{-j2\pi kL}{N}}e^{j2\pi\mu f_D PRI}}{X_\mu[k](H_\mu[k])^2}=e^{\frac{-j2\pi kL}{N}}e^{j2\pi\mu f_D PRI}$$

Since the OFDM frequency domain symbol, channel frequency domain response coefficient, and echo frequency domain item for each subcarrier in each operation cycle can be determined, the element values of the above quotient matrix can also be determined. By combining all element values of the quotient matrix, the distance information and relative speed information can be obtained.

Based on the foregoing various embodiments, as an optional embodiment, determining the communication and sensing detection result of the terminal according to the third sub-items corresponding to respective subcarriers of each downlink phase includes:

for a downlink phase, obtaining fourth sub-items corresponding to respective subcarriers of the downlink phase by performing an inverse discrete Fourier transform (IDFT) operation on the third sub-items corresponding to respective subcarriers of the downlink phase;

for a subcarrier, obtaining fifth sub-items corresponding to the subcarrier of respective downlink phases by performing a discrete Fourier transform (DFT) operation on the fourth sub-items corresponding to the subcarrier of the respective downlink phase; and

determining the communication and sensing detection result according to the fifth sub-items corresponding to at least one subcarrier in the at least one downlink phase.

Specifically, the embodiments of the present disclosure can perform an IDFT operation on each column of the aforementioned quotient matrix $\mathbf{M}_D$ with N elements. Thereby, the elements in the quotient matrix $\mathbf{M}_D$ are updated to the fourth sub-items corresponding to the subcarriers, in order to extract the distance information of the terminal. Then, a DFT operation is performed on each row of the matrix after the IDFT operation with $N_f$ elements. Consequently, the elements in the matrix are further updated to the fifth sub-items corresponding to the subcarriers, in order to extract the speed information of the terminal. By taking absolute values of the elements of the matrix obtained after the DFT operation, a three-dimensional radar display image can be obtained, and thus the communication and sensing detection result is acquired.

The method for determining the communication and sensing detection result used in the present disclosure can detect a maximum target distance of $r_{max} = Tc/2$, and a maximum relative speed is $v_{max} = \pm c/(8f_c T_{sym})$, where $c$ and $f_c$ are the speed of light and the carrier frequency, respectively. Furthermore, a distance resolution of this method is $c/2N\Delta f$, and a speed resolution is $c/4N_f f_c T_{sym}$.

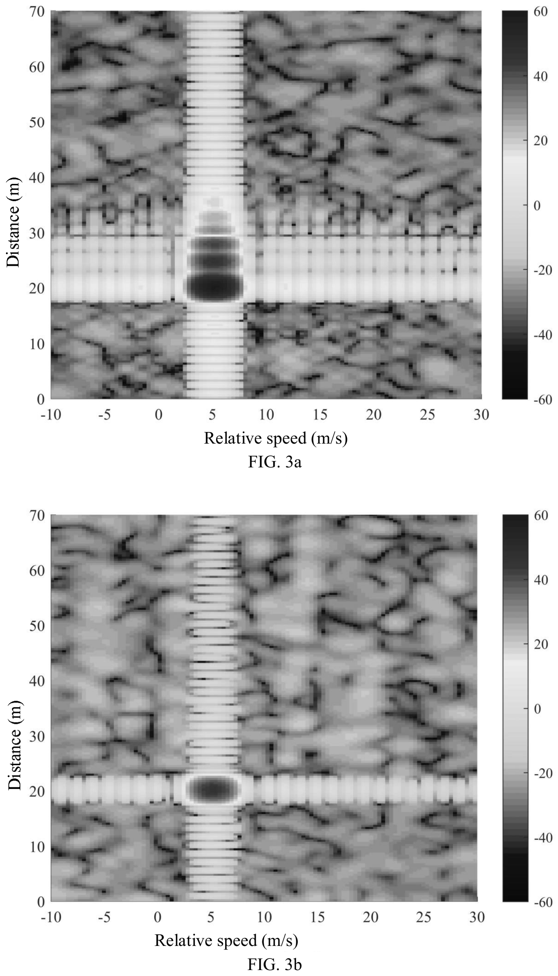

Assume a single communication target user exists in the environment at a distance of 20m with a relative speed of 5m/s. Its uplink channel estimation result adopts an ideal channel estimation result. The simulation parameters are: number of subcarriers is 1620, cumulative number of symbols is 560, carrier frequency is 5 GHz, subcarrier spacing is 60 kHz, CP period is 1.2 μs, bandwidth is 97.2 MHz, maximum operating distance is 179.9 m, maximum detection speed is $\pm$ 419.5 m/s, distance resolution is 1.54 m, and speed resolution is 1.5 m/s. FIG. 3a and FIG. 3b are schematic diagrams of range-speed radar images obtained by the related art and the present disclosure, respectively. As can be seen from FIG. 3a, after experiencing the two-way multipath channel, the integrated echo signal presents multiple multipath false target peaks along the range axis in the range-speed radar image after radar processing. In contrast, FIG. 3b shows that after the multipath interference cancellation processing proposed in the present disclosure, the multipath false target peaks in the radar image are eliminated, leaving only a required communication target detection peak, whose distance and relative speed are accurate. It can be seen that the embodiments of the present disclosure can effectively eliminate the radar multipath interference of the communication target user in the radar image.

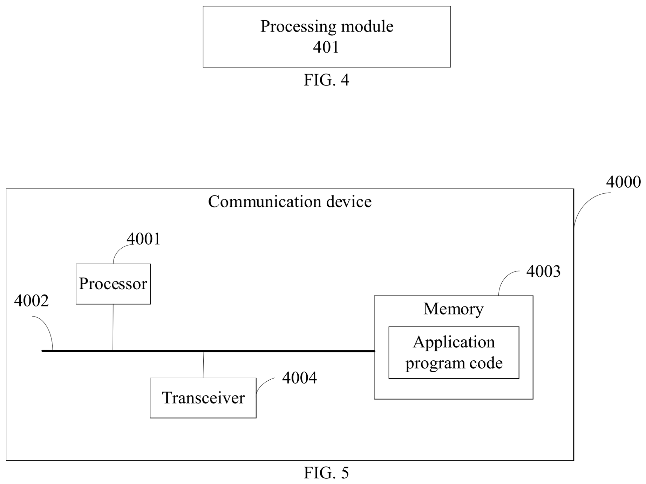

An embodiment of the present disclosure provides an apparatus for determining a communication and sensing detection result. As shown in FIG. 4, the apparatus may include: a processing module 401, configured to determine, in at least one operation cycle, an uplink channel estimation result in an uplink phase and a communication and sensing frequency domain transmission signal and a communication and sensing frequency domain reception signal in a downlink phase; and

the processing module 401 is further configured to determine a communication and sensing detection result according to the uplink channel estimation result, the communication and sensing frequency domain transmission signal and the communication and sensing frequency domain reception signal in the at least one operation cycle;
where one operation cycle includes an uplink phase and a downlink phase;
the communication and sensing frequency domain reception signal is determined by demodulating an echo signal, the echo signal is a reflected signal from a terminal with respect to an integrated signal transmitted by the apparatus in the downlink phase; and
the integrated signal is determined by modulating the communication and sensing frequency domain transmission signal.

The apparatus of the embodiment of the present disclosure can execute the method provided by the embodiments of the present disclosure, and the implementation principles are similar. The actions performed by the modules in the apparatus of the various embodiments of the present disclosure correspond to the steps in the method of the various embodiments of the present disclosure. For detailed functional descriptions of the modules of the apparatus, reference may be made to the descriptions in the corresponding methods shown previously, which will not be repeated here.

An embodiment of the present disclosure provides a communication device, including a memory, a processor, and a computer program stored on the memory. The processor executes the computer program to implement the steps of the method for determining the communication and sensing detection result. Compared with the related art, it can be achieved that: by analyzing the generation logic and transmission process of the echo signal, the embodiments of the present disclosure determine that processing the echo signal by further incorporating the estimated propagation channel information, based on the existing integrated signal, can effectively eliminate the inherent radar multipath interference of the terminal. To obtain the propagation channel estimation, the embodiments of the present disclosure subdivide each operation cycle into uplink and downlink phases. By receiving and parsing the uplink signal in the uplink phase, the channel estimation for each operation cycle is obtained.

In an optional embodiment, a communication device is provided. As shown in FIG. 5, the communication device 4000 shown in FIG. 5 includes a processor 4001 and a memory 4003. The processor 4001 and the memory 4003 are connected, for example, via a bus 4002. In some examples, the communication device 4000 may further include a transceiver 4004, which can be used for data interaction between the communication device and other communication devices, such as data transmission and/or data reception. It should be noted that there is not only one transceiver 4004 in practical application, and the structure of the communication device 4000 does not constitute a limitation to the embodiment of the present disclosure.

The processor 4001 may be a central processing unit (CPU), a general-purpose processor, a digital signal processor (DSP), an application specific integrated circuit (ASIC), a field programmable gate array (FPGA) or other programmable logic devices, transistor logic devices, hardware components or any combination thereof. Which may implement or perform various illustrative logical blocks, modules, and circuits described in connection with the present disclosure. The processor 4001 can also be a combination that realizes computing functions, for example, including one or more microprocessor combinations, DSP and microprocessor combinations, etc.

The bus 4002 may include a pathway to transmit information between the components described above. The bus 4002 may be a peripheral component interconnect (PCI) bus or an extended industry standard architecture (EISA) bus, etc. The bus 4002 may be divided into address bus, data bus, control bus, etc. For convenience of representation, only one thick line is used in FIG. 5, but it does not mean that there is only one bus or one type of bus.

The memory 4003 may be a read only memory (ROM) or other types of static storage devices that can store static information and instructions, a random access memory (RAM) or other types of dynamic storage devices that can store information and instructions, as well as an electrically erasable programmable read only memory (EEPROM), a compact disc read only memory (CD-ROM) or other optical disc storage, optical disc storage (including compact disc, laser disc, optical disc, digital versatile disc, Blu-ray disc, etc.), magnetic disc storage medium, other magnetic storage devices, or any other medium capable of carrying or storing computer programs and capable of being read by a computer, without limitation herein.

The memory 4003 is configured to store a computer program for executing the embodiments of the present disclosure, and the execution is controlled by the processor 4001. The processor 4001 is configured to execute the computer program stored in the memory 4003 to realize the steps shown in the aforementioned method embodiments.

An embodiment of the present disclosure provides a computer-readable storage medium, on which a computer program is stored, and when the computer program is executed by a processor, the steps of the aforementioned method embodiments and the corresponding contents can be realized.

An embodiment of the present disclosure further provides a computer program product, including a computer program, which, when executed by a processor, performs the steps and corresponding contents of the aforementioned method embodiments.

The terms "first", "second", "third", "fourth", "1", "2" and so on (if any) in the description and claims of the present disclosure are used to distinguish similar objects, and are not necessarily used to describe a specific order or sequence. It should be understood that the data used in this way can be interchanged where appropriate so that the embodiments of the present disclosure described herein can be implemented in a sequence other than that shown in the figures or text description.

It should be understood that although arrows indicate various operational steps in the flowcharts of the embodiments of the present disclosure, the order in which these steps are performed is not limited to the order indicated by the arrows. Unless otherwise expressly stated herein, in some implementation scenarios of the embodiments of the present disclosure, the implementation steps in the flowcharts may be executed in a different order as required. Furthermore, some or all of the steps in each flowchart are based on the actual implementation scenario and may include multiple sub-steps or multiple stages. Some or all of these sub-steps or stages can be executed at the same time, and each sub-step or stage of these sub-steps or stages can also be executed at different times. In scenarios with different execution times, the execution order of these sub-steps or stages can be flexibly configured according to requirements, and the present disclosure does not limit this.

The above are merely optional implementations for some scenarios of the present disclosure. It should be noted that for those skilled in the art, other similar implementation methods based on the technical concept of the present disclosure, without departing from the technical concept of the present disclosure, also fall within the protection scope of the embodiments of the present disclosure.

## Claims

1. A method for determining a communication and sensing detection result, performed by a network device and comprising:

   determining, in at least one operation cycle, an uplink channel estimation result in an uplink phase and a communication and sensing frequency domain transmission signal and a communication and sensing frequency domain reception signal in a downlink phase; and
   determining a communication and sensing detection result according to the uplink channel estimation result, the communication and sensing frequency domain transmission signal and the communication and sensing frequency domain reception signal in the at least one operation cycle;

wherein one operation cycle comprises an uplink phase and a downlink phase;

the communication and sensing frequency domain reception signal is determined by demodulating an echo signal, the echo signal is a reflected signal from a terminal with respect to an integrated signal transmitted by the network device in the downlink phase; and

the integrated signal is determined by modulating the communication and sensing frequency domain transmission signal.

2. The method according to claim 1, wherein the determining a communication and sensing detection result according to the uplink channel estimation result, the communication and sensing frequency domain transmission signal and the communication and sensing frequency domain reception signal in the at least one operation cycle comprises:

determining an echo channel frequency domain response of an operation cycle according to an uplink channel estimation result of the operation cycle, wherein the echo channel frequency domain response is a channel frequency domain response of the echo signal after two-way propagation; and

determining the communication and sensing detection result according to the echo channel frequency domain response, the communication and sensing frequency domain transmission signal, and the communication and sensing frequency domain reception signal in the at least one operation cycle.

3. The method according to claim 2, wherein the communication and sensing frequency domain reception signal comprises echo frequency domain terms of all subcarriers in a corresponding downlink stage;

the echo frequency domain items comprise:

a first sub-item related to an orthogonal frequency division multiplexing (OFDM) frequency domain symbol of a corresponding subcarrier;

a second sub-item related to a channel frequency domain response coefficient of a corresponding subcarrier; and

a third sub-item related to the communication and sensing detection result of the terminal.

4. The method according to claim 3, wherein the communication and sensing frequency domain transmission signal comprises OFDM frequency domain symbols of all subcarriers in a corresponding downlink phase;

the echo channel frequency domain response comprises channel frequency domain response coefficients of all subcarriers in the corresponding downlink phase;

the determining the communication and sensing detection result according to the echo channel frequency domain response, the communication and sensing frequency domain transmission signal, and the communication and sensing frequency domain reception signal in the at least one operation cycle comprises:

obtaining the third sub-item of the echo frequency domain item of the corresponding subcarrier in the downlink phase by eliminating the first sub-item and the second sub-item of the echo frequency domain item of the corresponding subcarrier according to the OFDM frequency domain symbol of the subcarrier in the communication and sensing frequency domain transmission signal and the channel frequency domain response coefficient of the corresponding subcarrier in the echo channel frequency domain response of the downlink phase; and

determining the communication and sensing detection result according to the third sub-items corresponding to respective subcarriers of at least one downlink phase.

5. The method according to claim 4, wherein the determining the communication and sensing detection result according to the third sub-items corresponding to respective subcarriers of each downlink phase comprises:

for a downlink phase, obtaining fourth sub-items corresponding to respective subcarriers of the downlink phase by performing an inverse discrete Fourier transform (IDFT) operation on the third sub-items corresponding to respective subcarriers of the downlink phase;

for a subcarrier, obtaining fifth sub-items corresponding to the subcarrier of respective downlink phases by performing a discrete Fourier transform (DFT) operation on the fourth sub-items corresponding to the subcarrier of the respective downlink phases; and

determining the communication and sensing detection result according to the fifth sub-items corresponding to at least one subcarrier in the at least one downlink phase.

6. The method according to any one of claims 3-5, wherein the third sub-item of the echo frequency domain item comprises a distance factor and a speed factor;

wherein the distance factor is related to a subcarrier and an echo delay of the terminal; and
the speed factor is related to an operation cycle and a Doppler frequency offset of the terminal.

7. The method according to claim 2, wherein the uplink channel estimation result comprises a channel time domain response of one-way propagation.

8. The method according to claim 7, wherein the determining an echo channel frequency domain response of an operation cycle according to an uplink channel estimation result of the operation cycle comprises:

obtaining a channel frequency domain response of one-way propagation of the operation cycle by performing a discrete Fourier transform (DFT) operation on the channel time domain response of one-way propagation of the operation cycle; and
determining the echo channel frequency domain response of the operation cycle according to the channel frequency domain response of one-way propagation of the operation cycle.

9. The method according to claim 8, wherein the channel time domain response comprises a channel time domain response coefficient of a multipath channel length, and the multipath channel length does not exceed half of a cyclic prefix length.

10. The method according to any one of claims 1-8, wherein a duration of the uplink phase and a duration of the downlink phase are each a duration of a symbol period.

11. An apparatus for determining a communication and sensing detection result, comprising:

a processing module, configured to determine, in at least one operation cycle, an uplink channel estimation result in an uplink phase and a communication and sensing frequency domain transmission signal and a communication and sensing frequency domain reception signal in a downlink phase; and
the processing module is further configured to determine a communication and sensing detection result according to the uplink channel estimation result, the communication and sensing frequency domain transmission signal and the communication and sensing frequency domain reception signal in the at least one operation cycle;
wherein one operation cycle comprises an uplink phase and a downlink phase;
the communication and sensing frequency domain reception signal is determined by demodulating an echo signal, the echo signal is a reflected signal from a terminal with respect to an integrated signal transmitted by the apparatus in the downlink phase; and
the integrated signal is determined by modulating the communication and sensing frequency domain transmission signal.

12. A communication device, comprising a memory, a processor and a computer program stored on the memory, wherein the processor executes the computer program to implement the steps of the method according to any one of claims 1-10.

13. A computer-readable storage medium on which a computer program is stored, wherein the computer program, when executed by a processor, implements the steps of the method according to any one of claims 1-10.

Communication system 100

| Terminal 101 | Network device 102 |

FIG. 1

| Determine, in at least one operation cycle, an uplink channel estimation result in an uplink phase and a communication and sensing frequency domain transmission signal and a communication and sensing frequency domain reception signal in a downlink phase | S201 |

| Determine a communication and sensing detection result according to the uplink channel estimation result, the communication and sensing frequency domain transmission signal and the communication and sensing frequency domain reception signal in the at least one operation cycle | S202 |

FIG. 2a

FIG. 2b

FIG. 2c

FIG. 3a

FIG. 3b

Processing module
401

FIG. 4

Communication device

4000

4001

Processor

4002

4003

Memory

Application
program code

4004

Transceiver

FIG. 5

## INTERNATIONAL SEARCH REPORT

| International application No. |
| --- |
| **PCT/CN2023/099979** |

### A. CLASSIFICATION OF SUBJECT MATTER

H04L25/02(2006.01)i

According to International Patent Classification (IPC) or to both national classification and IPC

### B. FIELDS SEARCHED

Minimum documentation searched (classification system followed by classification symbols)

IPC:H04W,H04L,H04Q

Documentation searched other than minimum documentation to the extent that such documents are included in the fields searched

Electronic data base consulted during the international search (name of data base and, where practicable, search terms used)

CNTXT, ENTXT, DWPI, CNKI, IEEE: 信道, 估计, 上行, 下行, 接收, 发送, 一体化, 回波, 通感, 探测, 雷达, channel, estimate, uplink, downlink, receive, transmit, integrate, echo, sense, radar

### C. DOCUMENTS CONSIDERED TO BE RELEVANT

| Category* | Citation of document, with indication, where appropriate, of the relevant passages | Relevant to claim No. |
| --- | --- | --- |
| A | CN 116106900 A (XIDIAN UNIVERSITY) 12 May 2023 (2023-05-12) description, paragraphs 5-69 | 1-13 |
| A | CN 111628948 A (BEIJING UNIVERSITY OF POSTS AND TELECOMMUNICATIONS) 04 September 2020 (2020-09-04) entire document | 1-13 |
| A | CN 115118402 A (HUAWEI TECHNOLOGIES CO., LTD.) 27 September 2022 (2022-09-27) entire document | 1-13 |
| A | WO 2022110408 A1 (PENG CHENG LABORATORY) 02 June 2022 (2022-06-02) entire document | 1-13 |
| A | 鲁立志等 (LU, Lizhi et al.). "基于OFDM波形的雷达和通信一体化研究 (Research on Integrated Radar And Communications based on OFDM Waveform)" 信息技术 (Information Technology). No. 2, 25 February 2014 (2014-02-25), entire document | 1-13 |

☐ Further documents are listed in the continuation of Box C.　　☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **20 November 2023** | **24 November 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/099979**

| Patent document cited in search report | | | Publication date (day/month/year) | Patent family member(s) | | | Publication date (day/month/year) |
|---|---|---|---|---|---|---|---|
| CN | 116106900 | A | 12 May 2023 | None | | | |
| CN | 111628948 | A | 04 September 2020 | None | | | |
| CN | 115118402 | A | 27 September 2022 | WO | 2022194263 | A1 | 22 September 2022 |
| WO | 2022110408 | A1 | 02 June 2022 | CN | 112152951 | A | 29 December 2020 |

Form PCT/ISA/210 (patent family annex) (July 2022)